# EUROPÄISCHE PATENTSCHRIFT

(11) **EP 1 529 659 B1**
(45) Veröffentlichungstag und Bekanntmachung des Hinweises auf die Patenterteilung: **16.11.2011**
(21) Anmeldenummer: 04104619.4
(22) Anmeldetag: 23.09.2004
(51) Int. Cl.: B60C 11/03, B60C 11/12

(54) **Fahrzeugluftreifen**
Pneumatic vehicle tyre
Pneumatique pour véhicules

(30) Priorität: 04.11.2003 DE 10352149
(43) Veröffentlichungstag der Anmeldung: 11.05.2005
(73) Patentinhaber: Continental Reifen Deutschland GmbH, 30165 Hannover (DE)
(72) Erfinder: Diensthuber, Franz, 30167, Hannover (DE); Heine, Stefan, 30163, Hannover (DE)
(74) Vertreter: Finger, Karsten

(56) Entgegenhaltungen:
- EP-A- 0 420 834
- EP-A- 0 428 472
- EP-A- 0 846 577
- EP-A- 0 921 020

## Beschreibung

Die Erfindung betrifft einen Fahrzeugluftreifen für den Einsatz unter winterlichen Fahrbedingungen mit einem Laufstreifen, welcher durch Umfangsnuten, Quernuten, Rillen und dergleichen in Profilpositive gegliedert ist und bei dem eine der Umfangnuten den Laufstreifen in zwei unterschiedlich ausgebildete Bereiche teilt, einen, bezogen auf das Fahrzeug, bei montiertem Reifen außenseitig gelegenen Außenabschnitt und einen Innenabschnitt, wobei schulterseitig jeweils eine durch Quernuten gegliederte Blockreihe vorgesehen ist, und wobei die Quernuten in der Schulterblockreihe des Außenbereiches, in einander entsprechenden Pitches betrachtet, schmäler sind als jene in der Schulterblockreihe des Innenbereiches.

Es ist bekannt, PKW-Winterreifen mit Laufstreifen zu versehen, die in zwei funktional unterschiedliche Bereiche aufgeteilt sind. Dadurch wird das Laufstreifenprofil deutlich asymmetrisch gestaltet.

Ein Reifen der eingangs genannten Art ist aus der EP-A-0 420 834 bekannt. Um das Abrollgeräusch günstig zu beeinflussen, sind die Quernuten im Außenabschnitt über mindestens 70 % ihrer Länge schmäler ausgeführt als die Quernuten im Innenabschnitt. Darüber hinaus weisen die Quernuten im Außenabschnitt eine konstante Breite auf. Bei dem aus der EP-A-0 428 472 bekannten Reifen ist der Laufstreifen derart ausgeführt, dass drei axiale Bereiche vorhanden sind, die jeweils in ihrer Breite einem Drittel der Breite des Laufstreifens entsprechen, wobei in diesen axialen Bereichen die Netto-Brutto-Verhältnisse unterschiedlich sind. Um den Laufstreifenabrieb zu vergleichsmäßigen, sind entweder die Kanten der Blockelemente abgeschrägt und/oder diagonal verlaufende Nuten mit unterschiedlichen Winkeln im Bezug auf die äquatoriale Ebene des Reifens orientiert und/oder die sich diagonal erstreckende Nuten mit unterschiedlichen Breiten oder unterschiedlichen Tiefen entlang ihres Verlaufes ausgeführt.

Ein Reifen mit einem weiteren asymmetrischen Laufstreifenprofil ist beispielsweise aus der DE 197 53 819 A1 bekannt. Bei diesem Reifen sind die Profilpositive im Außenbereich, dies ist jener Bereich des Reifens, welcher bei montiertem Reifen der Außenseite zugewandt ist, mit einer höheren Querschubsteifigkeit ausgebildet, als die Profilpositive im Innenbereich. Durch die steifere Ausbildung der Profilpositive auf dem der Fahrzeugaußenseite zugehörigen Bereich des Laufstreifenprofils können gute Handlingeigenschaften auf trockener Straße erzielt werden. Der Innenbereich des Laufstreifens ist für das Handling weniger wichtig, hat aber Bedeutung bezüglich des Griffes auf Eis, Schnee und Nässe soll daher weniger steife Profilpositive aufweisen.

Winterreifen mit derart asymmetrischen Laufstreifen weisen grundsätzlich gegenüber herkömmlich ausgeführten Reifen ein besseres Handling auf trockener Straße und bessere Wintereigenschaften, insbesondere guten Griff auf Eis und Schnee, auf. Trotzdem sind diese asymmetrischen Laufstreifen weiter verbesserungswürdig.

Der Erfindung liegt daher die Aufgabe zu Grunde, einen Reifen der eingangs genannten Art bezüglich seiner Handlingeigenschaften auf trockenen Straßen und seiner Wintereigenschaften weiter zu verbessern bzw. zu optimieren.

Gelöst wird die gestellte Aufgabe erfindungsgemäß dadurch, dass die Profilpositive jeweils mit einer Vielzahl von zumindest im Wesentlichen in Querrichtung verlaufenden Einschnitten versehen sind, dass die Breite der Schulterblockreihe des Außenbereiches größer ist als die Breite der Schulterblockreihe des Innenbereiches, dass der gegenseitige Abstand der Einschnitte in den Blöcken der Schulterblockreihe des Außenbereiches größer ist als der Abstand der Einschnitte in den Blöcken der Schulterblockreihe des Innenbereiches und dass die Einschnitte in den Blöcken der Schulterblockreihe des Außenbereiches schmäler sind als die Einschnitte in den Blöcken der Schulterblockreihe des Innenbereiches.

Die Kombination dieser Maßnahmen bewirkt, dass der Außenbereich des Laufstreifens hinsichtlich der Handlingeigenschaften auf trockenen Straßen optimiert wird, indem in diesem Bereich gezielt die Steifigkeit erhöht und auf besonders vorteilhafte Weise beeinflusst wird, und dass im Laufstreifeninnenbereich im Vergleich zum Außenbereich eine deutlich weichere strukturelle Gestaltung überwiegt, die hinsichtlich der Griffeigenschaften auf winterlichen und nassen Fahrbahnen optimiert ist.

Die erwähnten Eigenschaften des Laufstreifenprofils lassen sich durch einige konkretere Maßnahmen besonders gut verbessern. Zu diesen Maßnahmen gehört, dass die Breite der Quernuten in der Schulterblockreihe des Innenbereiches um mindestens 2% größer gewählt wird, als die Breite der Quernuten in der Schulterblockreihe des Außenbereiches.

Eine weitere Maßnahme sieht vor, dass die Breite der Schulterblockreihe des Außenbereiches um mindestens 10% größer gewählt wird als die Reihe der Schulterblockreihe des Innenbereiches.

Eine weitere besonders vorteilhafte Maßnahme betrifft die unterschiedliche Breite der Einschnitte. Insbesondere soll die Breite der Einschnitte in den Blöcken der Schulterblockreihe des Außenbereiches um mindestens 20% geringer sein als die Breite der Einschnitte in den Blöcken der Schulterblockreihe des Innenbereiches.

Gemäß einer bevorzugten Ausführungsform der Erfindung werden Einschnitte in den Profil positiven im Innenbereich besonders gestaltet, indem Haupteinschnitte vorgesehen werden, welche mit mindestens zwei wechselseitig in die eine und die andere Umfangsrichtung weisenden Nebeneinschnitten versehen sind, die keine Verbindung zu anderen Einschnitten aufweisen, wobei die benachbarten Haupteinschnitte bezüglich der Orientierungsrichtung der abzweigenden Nebeneinschnitte übereinstimmend ausgeführt sind. Durch solche Haupteinschnitte mit wechselseitig versetzt angeordneten Nebeneinschnitten können die Seitenführungseigenschaften des Reifens deutlich verbessert werden.

Die Einschnitte in den Profil positiven im Außenbereich werden bevorzugt wellenoder sinusförmig ausgeführt, wobei die Amplitude der Wellenform der Einschnitte in einer der Erstreckungsrichtungen der Einschnitte zunimmt. Durch diese Einschnittausgestaltung kann auf die Steifigkeit des Profilpositivs und damit auf das Verhalten des Profilpositivs beim Auftreten von Umfangs- oder Querkräften gezielt Einfluss genommen werden. Eine stärker ausgeprägte Schwingung der Wellenform der Einschnitte, d.h. eine höhere Amplitude, bewirkt eine stärker ausgeprägte Abstützung, welche vor allem die Handlingeigenschaften verbessert.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Draufsicht auf eine Teilabwicklung einer Ausführungsform eines Laufflächenprofils eines Fahrzeugluftreifens,
Fig. 1a und 1b Querschnitte durch Umfangsnuten,
Fig. 2 einen Schulterblock aus Fig. 1 in vergrößerter Darstellung,
Fig. 3 einen einzelnen Einschnitt aus den Schulterblock gemäß Fig. 2,
Fig. 4 eine Draufsicht auf eine Teilabwicklung einer weiteren Ausführungsform eines Laufflächenprofils und
Fig. 5 ein Detail aus Fig. 4.

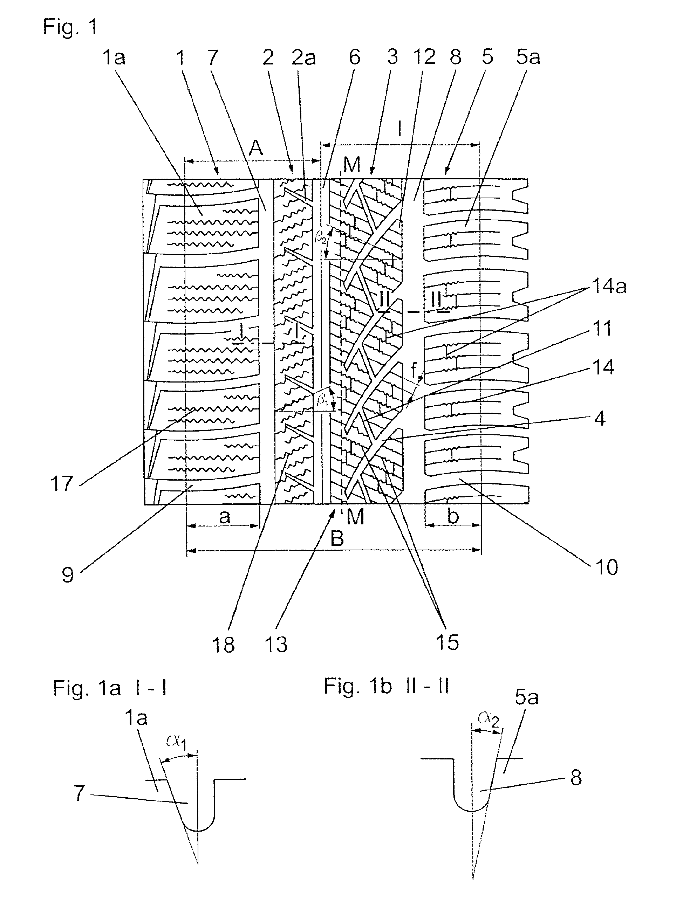

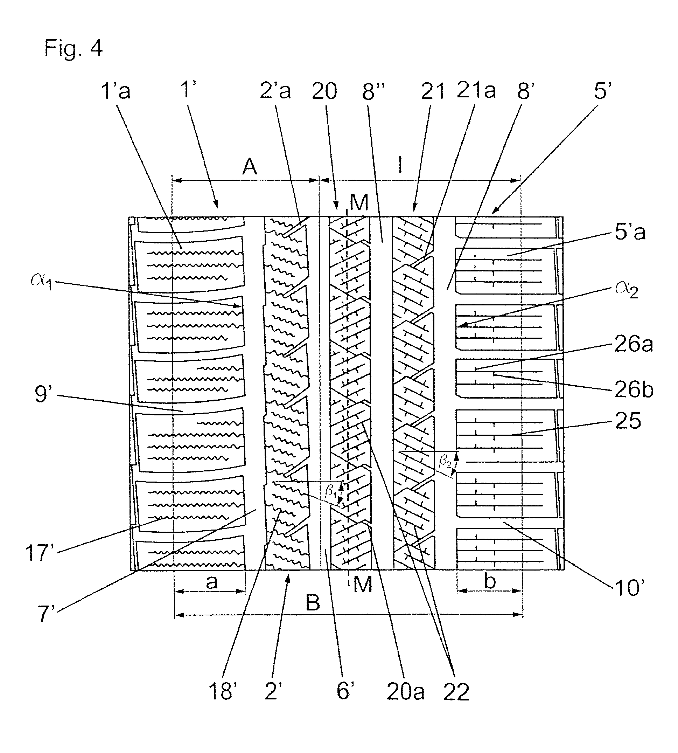

Die in Fig. 1 und 4 gezeigten Laufstreifenprofile werden über die Breite B des Reifens in der Bodenaufstandsfläche betrachtet. Beide Laufstreifenprofile sind axial in zwei funktional unterschiedliche Bereiche A und I aufgeteilt. Der Außenbereich A ist jener Bereich, welcher bei am Fahrzeug montierten Reifen an der Fahrzeugaußenseite liegen soll und ist konstruktiv hinsichtlich möglichst optimaler Trockeneigenschaften des Laufstreifenprofils ausgelegt. Der Innenbereich I des Laufstreifens ist speziell für gute Wintergriffeigenschaften ausgebildet.

Bei dem in Fig.1 gezeigten Laufstreifenprofil gehören zu den den Laufstreifenaußenbereich A bildenden Profilpositiven eine Schulterblockreihe 1 und ein Laufstreifenband 2, zu den Profilpositiven, welche den Innenbereich I bilden, gehören ein durch Diagonalrillen 4 strukturierter Umfangsbereich 3 und eine zweite Schulterblockreihe 5. Das Band 2 ist vom Umfangsbereich durch eine geradlinig in Umfangsrichtung umlaufende Umfangsnut 6 getrennt. Weitere Umfangsnuten 7, 8 grenzen an die Schulterblockreihen 1, 5 an. Die im Innenbereich I des Laufstreifens befindliche Umfangsnut 8 ist die Breiteste sämtlicher Umfangsnuten 6, 7, 8. Die Trennung zwischen Innenbereich I und Außenbereich A erfolgt durch die Umfangsnut 6, welche gegenüber der Mittelumfangslinie M-M nach außen versetzt ist, sodass der Außenabschnitt A etwa 40% der Breite B der Bodenaufstandfläche einnimmt. Das Laufstreifenband 2 ist durch Sacknuten 2a, die von der Umfangsnut 6 ausgehen und unter einem Winkel von etwa 60° zur Umfangsrichtung verlaufen, strukturiert. Die Schulterblockreihen 1, 5 weisen Blöcke 1a, 5a auf, die durch Quernuten 9, 10 voneinander getrennt sind.

Die Profilpositive sind durch die Sacknuten 2a, die Diagonalrillen 4 sowie die Quernuten 6, 10 in im Wesentlichen gleichartige, in Reifenumfangsrichtung aufeinanderfolgende Profilabschnitte, sogenannte Pitches, gegliedert. Pitches werden in bestimmten Pitchfolgen üblicherweise in zwei bis fünf unterschiedlichen Umfangslängen vorgesehen, um das Rollgeräusch zu optimieren. Die Pitchanzahl der Pitches im Außenbereich A des Laufsteifens ist kleiner als die Pitchanzahl im Innenbereich I. Der Unterschied in der Pitchanzahl zwischen Außenbereich A zu Innenbereich I beträgt zwischen 7% und 12%. So kann beispielsweise die Pitchanzahl im Außenbereich 62 und im Innenbereich 68 betragen. Dadurch sind im Innenbereich I über den Umfang mehr und in Umfangsrichtung kürzere Profilpositive ausgebildet als im Außenbereich A. Die höhere Anzahl der Quernuten 10 im Innenbereich I stellt mehr Kanten zur Verfügung als im Außenbereich A. Sowohl in der im Außenbereich A als auch in der im Innenbereich I verlaufenden Schulterblockreihe 1, 5 sind die Quernuten 9, 10 mit unterschiedlichen Breiten, in Abhängigkeit von der Umfangslänge des Pitches - in kürzer ausgeführten Pitches schmälere, in länger ausgeführten Pitches breitere Quernuten 9, 10 - ausgeführt. Dabei werden die Quernuten 10 in der Schulterblockreihe 5 im Innenbereich I breiter ausgeführt als im Außenbereich A. Dies ist so zu verstehen, dass die breiteste Quernut 10 sowie die schmalste Quernut 10 in der Schulterblockreihe 5 um mindestens 2% breiter ausgeführt sind, als die breiteste und die schmalste Quernut 9 in der Schulterblockreihe 1 des Außenbereiches A.

Die Breite a der Schulterblockreihe 1 im Außenabschnitt A ist ferner größer als die Breite b der Schulterblockreihe 5 im Innenabschnitt I. Die Schulterblockreihe 1 ist dabei um mindestens 10% breiter als die Schulterblockreihe 5.

Der Umfangsbereich 3 ist durch die Diagonalrillen 4, welche ausgehend von der Umfangsnut 8 unter einem zur Umfangsrichtung abnehmenden Steigungswinkel verlaufen und mehr in Umfangsrichtung als in Querrichtung orientiert sind, sowie durch gegensinnig zu den Rillen 4 verlaufende Verbindungsrillen 11 in Blöcke 12 und ein vergleichsweise schmales Band 13 gegliedert.

Sämtliche Profil positive sind durch eine Vielzahl von in Querrichtung oder im Wesentlichen in Querrichtung verlaufenden Einschnitten strukturiert. Die Einschnitte weisen eine Breite zwischen 0,4 mm und 0,8 mm und eine Tiefe zwischen 1,5 mm und Dessintiefe, die üblicherweise zwischen 7 mm und 9 mm beträgt, auf. Im Innenabschnitt I des Laufstreifens sind in den Schulterblöcken 5a, je nach Pitchlänge, zwei oder drei parallel zu den Quernuten 10 orientierte Einschnitte 14 vorgesehen, die sich aus wellenförmigen und im Wesentlichen gerade verlaufenden Abschnitten zusammensetzen. Untereinander parallel verlaufende und analog zu den Einschnitten 14 ausgeführte Einschnitte 15 sind auch im Umfangsbereich 3 vorgesehen. In Umfangsrichtung benachbarte Einschnitte 14, 15 sind großteils durch je einen in Umfangsrichtung verlaufenden Verbindungseinschnitt 14a verbunden.

Fig. 1a und 1b zeigen Querschnitte durch die an die Schulterblockreihen 1, 5 anschließenden Umfangsnuten 7 bzw. 8. Laufstreifeninnenseitig verlaufen die Flanken der Umfangsnuten 7, 8 etwa in radialer Richtung. Die zweite Flanke der Umfangsnut 8 verläuft unter einem Winkel alpha₂ von ca. 6° zur radialen Richtung. Fig. 1a zeigt den Querschnitt durch die an die Schulterblockreihe 1 anschließende Umfangsnut 7, welche ebenfalls einen asymmetrischen Querschnitt aufweist. Die von den Schulterblöcken 1a gebildete Flanke der Umfangsnut 7 verläuft unter einem Winkel alpha₁ zur radialen Richtung geneigt, welcher um mindestens 5° größer ist als der Winkel alpha₂ der Blockflanken, die die Umfangsnut 8 begrenzen.

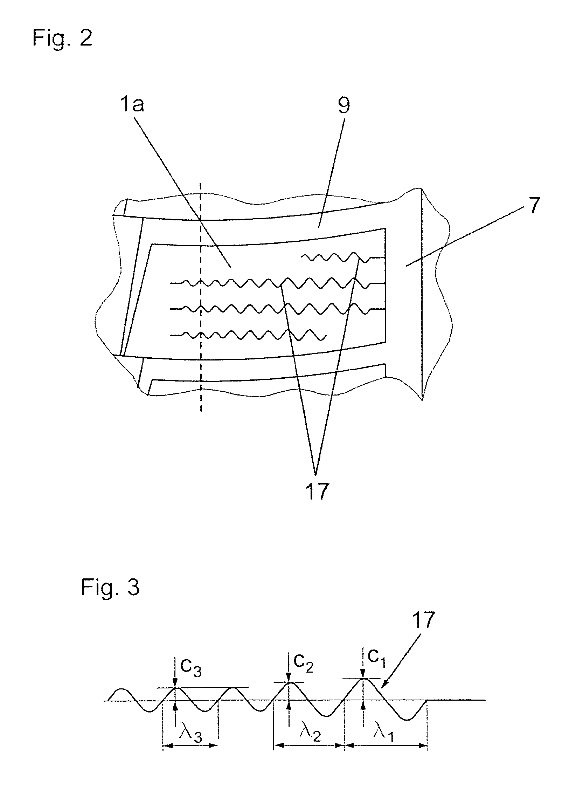

Die in den Profilpositiven im Außenbereich A vorgesehenen Einschnitte 17, 18 sind auf eine besondere Weise sinus- bzw. wellenförmig ausgeführt. Die Wellenform ist insbesondere aus Fig. 2 und Fig. 3 ersichtlich. Zumindest die Amplitude, insbesondere aber auch die Wellenlänge der Einschnitte 17 nimmt in eine Richtung, bei den Einschnitten 17 mit zunehmender Entfernung vom Laufstreifenrand in Richtung Umfangsnut 7 zu. Diese Zunahme kann kontinuierlich oder schrittförmig erfolgen. Bei der schrittförmigen Zunahme weisen die Wellen der Einschnitte 17 mindestens zwei unterschiedliche Amplituden auf. Fig. 3 zeigt einen Einschnitt 17 mit drei unterschiedlich großen Amplituden c₁, c₂, c₃. Im Bereich des Laufstreifenrandes weisen die Wellen die kleinste Amplitude c₃ auf, die zwischen 35% und 60% der größten Amplitude c₁ beträgt, die im Bereich einer oder mehrerer Wellen am anderen Ende des Einschnittes 17 vorliegt. Bei der dargestellten Ausführungsform weist der wellenförmige Einschnitt 17 über zumindest eine Wellenlänge eine Amplitude c₂ mittlerer Größe auf, welche zwischen 65% und 85% der größten Amplitude c₁ beträgt. Die Amplitude c₁ beträgt in der Größenordnung von 1 bis 2 mm. Mit der Amplitude vergrößert sich bevorzugt auch die Wellenlänge. Die größte Wellenlänge lambda₁ im Bereich jener Welle bzw. Wellen welche die größte Amplitude c1 besitzen beträgt mindestens das Zweifache der Amplitude c₁, die Wellenlänge lambda₂ im Bereich der Welle mit der mittleren Amplitude c₂ beträgt mindestens das Zweifache von c₂ und für die Wellenlänge lambda₃ mit der kleinsten Amplitude c₃ gilt ebenfalls, dass lambda₃ mindestens dem Zweifachen von c₃ entspricht. Dabei kann es zwischen den Wellen mit der kleinsten und der größten Amplitude c₃, c₁ noch weitere Abstufungen in der Wellenlänge geben.

Mit derart ausgeführten Einschnitten 17 versehene Schulterblöcke 1a sind in ihrem Mittelbereich weicher als in ihren Randbereichen zur Umfangsnut 7.

Um eine insgesamt eher steife Ausgestaltung der Schulterblockreihe 1a im Außenabschnitt A im Vergleich zu den Schulterblöcken 5a im Innenbereich I zu erreichen, können weitere Maßnahmen getroffen werden. Der gegenseitige Abstand benachbarter Einschnitte 17 - definiert als der gegenseitiger Abstand der in Erstreckungsrichtung verlaufenden Einschnittssymmetralen - ist in den Schulterblöcken 1a im Außenbereich A um mindestens 10% größer als der entsprechende gegenseitige Abstand der Einschnitte 14 in den Blöcken 5a der Schulterblockreihe 5. Eine weitere Maßnahme, die Profilpositive in der Schulterblockreihe 1a im Außenbereich A gegenüber jenen im Innenbereich I zu versteifen, besteht darin, die Einschnitte 17 mit einer geringeren Einschnittstärke auszuführen als die Einschnitte 14. Bevorzugt werden die Einschnitte 17 um mindestens 20% schmäler ausgeführt als die Einschnitte 14.

Auch im Laufstreifenband 2 sind die wellenförmigen Einschnitte 18 derart ausgeführt, dass ihre Amplitude von ihren einen Endbereichen ausgehend, wie oben beschrieben, zunimmt. Gleichermaßen kann auch die Wellenlänge der Einschnitte 18, wie beschrieben, variiert werden.

Die Orientierungsrichtung der Einschnitte 17 entspricht der Querrichtung, sodass bei der dargestellten Ausführungsform die Einschnitte 17 zu den leicht gebogen, aber ansonsten im Wesentlichen in Querrichtung verlaufenden Quernuten 9 nicht parallel verlaufen. Die im Laufstreifenband 2 angeordneten Einschnitte 18 sind unter einem spitzen Winkel beta₁ in der Größenordnung von 20° bis 40° zur Querrichtung orientiert. Der Winkel beta₁ ist höchstens gleich groß, insbesondere kleiner als beta₂, welches der Winkel ist, den die Einschnitte 15 im Umfangsbereich 3 mit der Querrichtung einschließen.

Bei dem in Fig. 4 gezeigten Laufstreifen ist der Außenbereich A sehr ähnlich zum Außenbereich A der in Fig. 1 gezeigten Ausführungsform ausgeführt. Dies betrifft vor allem die Ausgestaltung der Schulterblockreihe 1', der Schulterblöcke 1'a und des Laufstreifenbandes 2', das Vorsehen von zwei breiten Umfangsnuten 6', 7' und die Ausführung der Einschnitte 17' und 18'. Die Orientierung der Sacknuten 2'a und der Einschnitte 18' im Band 2' ist dabei gegensinnig zu jener der Sacknuten 2a und der Einschnitte 18 bei der ersten Ausführungsform.

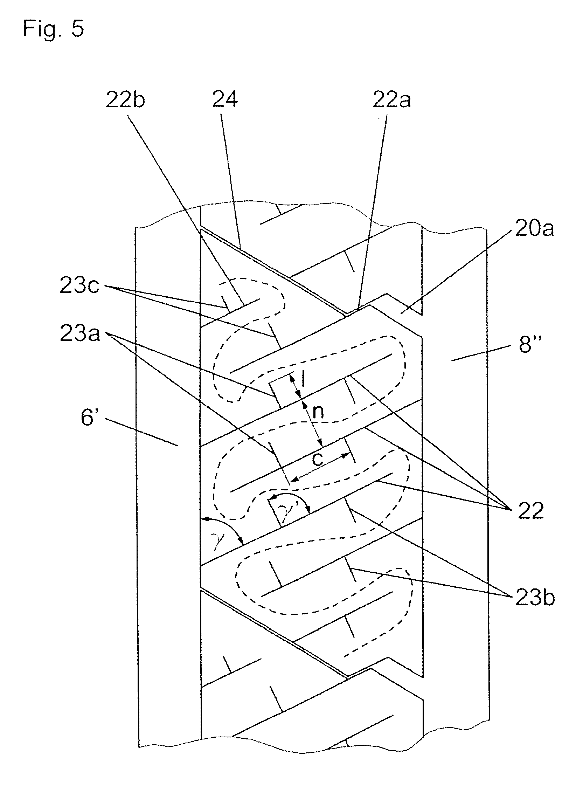

Im Innenbereich I sind bei der in Fig. 4 gezeigten Ausführungsform zwei Laufstreifenbänder 20, 21 vorgesehen, die durch Sacknuten 20a, 21 a strukturiert sind. Die beiden Laufstreifenbänder 20, 21 sind durch eine breite Umfangsnut 8" voneinander getrennt. Die Schulterblockreihe 5' im Innenbereich I ist durch in Querrichtung und gerade verlaufende Quernuten 10' in Blöcke 5'a gegliedert. Die Laufstreifenbänder 20, 21 und die Blöcke 5'a der Schulterblockreihe 5' sind mit besonders gestalteten Einschnitten versehen, welche im Folgenden anhand der Fig. 5, welche in einer vergrößerten Darstellung eine Draufsicht auf ein Detail des Laufstreifenbandes 20 zeigt, näher beschrieben. Von den das Laufstreifenband 20 begrenzenden Umfangsnuten 6', 8" gehen geradlinige, zueinander parallel und gegenüber der Umfangsrichtung unter einem Winkel von etwa 60° verlaufende Haupteinschnitte 22 aus. Die Haupteinschnitte 22 werden im Wesentlichen in Querrichtung orientiert, derart, dass der Winkel gamma mindestens 45°, insbesondere mindestens 55°, gewählt wird. Zwischen zwei in Umfangsrichtung benachbarten Sacknuten 20a sind zumindest zwei, gemäß Fig. 5 sind vier erfindungsgemäß ausgeführte Haupteinschnitte 22 vorgesehen. Die gegenseitige Anordnung der Einschnitte 22 ist derart, dass sie abwechselnd von der einen und der anderen Umfangsnut 6, 8" ausgehen und in einem, bezogen auf die Breite des Bandes 20, relativ geringen Abstand von 5 bis 20% der Breite des Laufstreifenbandes vor der anderen Umfangsnut enden.

Von jedem Haupteinschnitt 22 zweigen geradlinige Nebeneinschnitte 23a, 23b ab. Der eine Nebeneinschnitt 23a weist in die eine Umfangsrichtung, der andere Nebeneinschnitt 23b in die andere Umfangsrichtung. Der Winkel gamma' zwischen einem Einschnitt 22 und den Nebeneinschnitten 23a, 23b ist bevorzugt ein rechter Winkel, er beträgt insbesondere in der Größenordnung zwischen 80° und 100°. Bei sämtlichen vier Haupteinschnitten 22 zweigen die Nebeneinschnitte 23a und die Nebeneinschnitte 23b in übereinstimmende Richtungen und unter übereinstimmenden Winkeln von den Haupteinschnitten 22 ab. Sowohl die Anfangspunkte als auch die Endpunkte sämtlicher Nebeneinschnitte 23a, 23b liegen bei der dargestellten Ausführung auf Linien, die parallel zur jeweiligen Blockkante verlaufen. Bei der gezeigten Ausführungsform sind ferner sämtliche Nebeneinschnitte 23a, 23b gleich lang ausgeführt. Die Länge I der Nebeneinschnitte 23a, 23b beträgt vorzugsweise zwischen 45% und 55% des Normalabstandes n der benachbarten Haupteinschnitte 22. Die beiden Nebeneinschnitte 23a, 23b eines Haupteinschnittes 22 haben einen gegenseitigen Abstand, der mindestens dem Abstand n entspricht, vorzugsweise aber größer als n ist.

An den Enden der Sacknuten 20a sind zu den Haupteinschnitten 22 parallel verlaufende weitere Einschnitte 22a angesetzt, von welchen, parallel zu den Sacknuten 20a, in Richtung Umfangsnut verlaufende Einschnitte 24 ausgehen, die breiter sind als die Einschnitte 22 und auch durch Nuten ersetzt sein können. Weitere kurze Einschnitte 22b sind parallel zu den Einschnitten 22a vorgesehen. Die Einschnitte 22a, 22b sind in Übereinstimmung mit der Orientierung und Anordnung der Nebeneinschnitte 23a , 23b mit je einem Nebeneinschnitt 23c versehen. Anordnung und Ausführung der Nebeneinschnitte 23c sind an die Nebeneinschnitte 23a, 23b entsprechend angepasst.

Durch die wechselseitig versetzte Anordnung der Nebeneinschnitte 23a, 23b und die gegenseitige Verbindung der Haupteinschnitte 22 mit den beiden Umfangsnuten 6', 8" entstehen in den Laufstreifenbändern 20, 21 zwischen benachbarten Sacknuten 20a, 21 a zusammenhängende etwa mäanderförmig verlaufende Profilbereiche (siehe strichlierte Linie in Fig. 5), die das Laufstreifenband 20, 21 auf besonders vorteilhafte Weise versteifen.

Auch in den Schulterblöcken 5'a sind erfindungsgemäß ausgeführte Einschnitte 25 vorgesehen. Jeder Schulterblock 5'a weist entweder zwei oder drei parallel zu den Quernuten 10' verlaufende und von der Umfangsnut 8' ausgehende Haupteinschnitte 25 auf, welche mit Nebeneinschnitten 26a, 26b, die von den Haupteinschnitten 25 wechselseitig in die eine und in die andere Umfangsrichtung abzweigen, versehen sind. Bezüglich der Umfangslänge der Nebeneinschnitte 26a, 26b gilt das bereits oben Gesagte. Die Einschnitte 25 können auch derart im jeweiligen Block 5'a angeordnet werden, dass abwechselnd ein Einschnitt 25 in die Umfangsnut 8' einmündet und der andere bereits vor der Umfangsnut 8' endet.

Was die Breiten a, b der Schulterblockreihen 1'a, 5'a im Außenbereich A betrifft, die gegenseitigen Abstände der und die Breite der Einschnitte im Außen- und Innenbereich A, I, die Breite der Quernuten 9', 10', die Flankenwinkel der Umfangsnuten 7', 8' sowie die Winkel beta₁ und beta₂ betrifft gelten die obigen Angaben zur Ausführungsform gemäß Fig. 1.

Die Erfindung ist auf die dargestellten Ausführungsbeispiele nicht eingeschränkt, insbesondere ist es möglich, erfindungsgemäß ausgeführte Laufstreifenprofile mit anders gestalteten Einschnitten zu kombinieren.

## Patentansprüche

1. Fahrzeugluftreifen für den Einsatz unter winterlichen Fahrbedingungen mit einem Laufstreifen, welcher durch Umfangsnuten (6, 7, 8, 6', 7', 8', 8"), Quernuten (9, 10, 9', 10'), Rillen und dergleichen in Profilpositive gegliedert ist und bei dem eine der Umfangnuten (6, 6') den Laufstreifen in zwei unterschiedlich ausgebildete Bereiche teilt, einen, bezogen auf das Fahrzeug, bei montiertem Reifen außenseitig gelegenen Außenabschnitt (A) und einen Innenabschnitt (I), wobei schulterseitig jeweils eine durch Quernuten (9, 10, 9', 10') gegliederte Blockreihe vorgesehen ist, und wobei die Quernuten (9, 9') in der Schulterblockreihe (1, 1') des Außenbereiches (A), in einander entsprechenden Pitches betrachtet, schmäler sind als jene in der Schulterblockreihe (5, 5') des Innenbereiches (I),
**dadurch gekennzeichnet,**
**dass** die Profilpositive jeweils mit einer Vielzahl von zumindest im Wesentlichen in Querrichtung verlaufenden Einschnitten (14, 15, 16, 18, 17', 18', 25) versehen sind,
**dass** die Breite der Schulterblockreihe (1, 1') des Außenbereiches (A) größer ist als die Breite der Schulterblockreihe (5, 5') des Innenbereiches (I),
**dass** der gegenseitige Abstand der Einschnitte (17, 17') in den Blöcken (1a, 1'a) der Schulterblockreihe (1, 1') des Außenbereiches (A) größer ist als der Abstand der Einschnitte (14, 25) in der Schulterblockreihe (5,5') des Innenbereiches (I) und
**dass** die Einschnitte (17, 17') in den Blöcken (1a, 1'a) der Schulterblockreihen (1, 1') des Außenbereiches (A) schmäler sind als die Einschnitte (14, 25) in den Blöcken (5a, 5'a) der Schulterblockreihe (5, 5') des Innenbereiches (I).

2. Fahrzeugluftreifen nach Anspruch 1, **dadurch gekennzeichnet, dass** die Breite der Quernuten (10, 10') in der Schulterblockreihe (5, 5') des Innenbereiches (I) um mindestens 2% größer ist als die Breite der Quernuten (9, 9') in der Schulterblockreihe (1, 1') des Außenbereiches (A).

3. Fahrzeugluftreifen nach Anspruch 1 oder 2, **dadurch gekennzeichnet, dass** die Breite der Schulterblockreihe (1, 1') des Außenbereiches (A) um mindestens 10% größer ist als die Breite der Schulterblockreihe (5, 5') des Innenbereiches (I).

4. Fahrzeugluftreifen nach einem der Ansprüche 1 bis 3, **dadurch gekennzeichnet, dass** die Breite der Einschnitte (17, 17') in den Blöcken (1a, 1'a) der Schulterblockreihe (1, 1') des Außenbereiches (A) um mindestens 20% geringer ist als die Breite der Einschnitte (14, 15) in den Blöcken (5a, 5'a) der Schulterblockreihe (5, 5') des Innenbereiches (I).

5. Fahrzeugluftreifen nach einem der Ansprüche 1 bis 4, **dadurch gekennzeichnet, dass** die laufstreifenaußenseitige Flanke der die Schulterblockreihe (1, 1') des Außenbereiches (A) begrenzenden Umfangsnut (7, 7') einen um mindestens 5° größeren Winkel (alpha₁) mit der radialen Richtung einschließt als die laufstreifenaußenseitige Flanke der die Schulterblockreihe (5, 5') des Innenbereiches (I) begrenzenden Umfangsnut (8, 8').

6. Fahrzeugluftreifen nach einem der Ansprüche 1 bis 5, **dadurch gekennzeichnet, dass** die Einschnitte (17, 17', 18, 18') der Profilpositive im Außenbereich (A) mit der Querrichtung einen Winkel (beta₁) einschließen, der höchstens gleich dem Winkel (beta₂) ist, den die Einschnitte (14, 15, 22, 25) in den Profilpositiven im Innenbereich (I) mit der Querrichtung einschließen.

7. Fahrzeugluftreifen nach einem der Ansprüche 1 bis 6, **dadurch gekennzeichnet, dass** in Profilpositiven im Innenbereich (I) zumindest zwei einander benachbarte Haupteinschnitte (5, 5') vorgesehen sind, welche mit mindestens zwei wechselseitig in die eine und die andere Umfangsrichtung weisenden Nebeneinschnitten (22a, 23b, 26a, 26b) versehen sind, die keine Verbindung zu anderen Einschnitten aufweisen, wobei die benachbarten Haupteinschnitte (22, 25) bezüglich der Orientierungsrichtung der abzweigenden Nebeneinschnitte (22a, 23b, 26a, 26b) übereinstimmend ausgeführt sind.

8. Fahrzeugluftreifen nach Anspruch 7, **dadurch gekennzeichnet, dass** die Haupteinschnitte (22) in Profilquerrichtung derart gegeneinander versetzt sind, dass mäanderförmig verlaufende Profilpositivbereiche gebildet werden.

9. Fahrzeugluftreifen Anspruch 7 oder 8, **dadurch gekennzeichnet, dass** innerhalb eines Profilpositivs die von den Haupteinschnitten (22, 25) abzweigenden Nebeneinschnitte (22a, 23b, 26a, 26b) bezüglich der Umfangsrichtung übereinstimmende Positionen und Erstreckungsrichtungen aufweisen.

10. Fahrzeugluftreifen nach einem der Ansprüche 7 bis 9, **dadurch gekennzeichnet, dass** die Nebeneinschnitte (22a, 23b, 26a, 26b) unter einem Winkel von 80° bis 100° von den Haupteinschnitten (22, 25) abzweigen.

11. Fahrzeugluftreifen nach einem der Ansprüche 7 bis 10, **dadurch gekennzeichnet, dass** die Nebeneinschnitte (22a, 23b, 26a, 26b) eine Länge (1) bzw. Erstreckung aufweisen, die zwischen 45% und 55% des Normalabstandes (n) der einander benachbarten Haupteinschnitte (22, 25) beträgt.

12. Fahrzeugluftreifen nach einem der Ansprüche 7 bis 11, **dadurch gekennzeichnet, dass** die Nebeneinschnitte (22a, 23b, 26a, 26b) einen gegenseitigen Abstand (c) aufweisen, der mindesten dem Normalabstand (n) der einander benachbarten Haupteinschnitte (22, 25) beträgt.

13. Fahrzeugluftreifen nach einem der Ansprüche 7 bis 12, **dadurch gekennzeichnet, dass** die Haupt- und / oder die Nebeneinschnitte (22a, 23b, 26a, 26b) geradlinig verlaufen.

14. Fahrzeugluftreifen nach einem der Ansprüche 1 bis 6, **dadurch gekennzeichnet, dass** die Einschnitte (17, 17', 18, 18') in den Profilpositiven im Außenbereich (A) zumindest im Wesentlichen in Profilquerrichtung wellenförmig verlaufen, wobei die Amplitude (c₁, c₂, c₃) der Wellenform der Einschnitte (17, 17', 18, 18') in einer der Erstreckungsrichtungen der Einschnitte (17, 17', 18, 18') zunimmt.

15. Fahrzeugluftreifen nach Anspruch 14, **dadurch gekennzeichnet, dass** die Einschnitte (17, 17', 18, 18') ihre größte Amplitude an ihren Umfangsnuten (7, 7') zugewandten Endabschnitten aufweisen.

16. Fahrzeugluftreifen nach Anspruch 14 oder 15, **dadurch gekennzeichnet, dass** die Einschnitte (17, 17', 18, 18') ihre größte Amplitude an ihren in Umfangsnuten (6, 7, 6', 7') einmündenden Endabschnitten aufweisen.

17. Fahrzeugluftreifen nach einem der Ansprüche 14 bis 16, **dadurch gekennzeichnet, dass** die Amplitude (c₁, c₂, c₃) der wellenförmigen Einschnitte (17, 17', 18, 18') zumindest in zwei Stufen zunimmt.

18. Fahrzeugluftreifen nach einem der Ansprüche 14 bis 16, **dadurch gekennzeichnet, dass** die Amplitude der wellenförmigen Einschnitte (17, 17', 18, 18') kontinuierlich zunimmt.

19. Fahrzeugluftreifen nach einem der Ansprüche 14 bis 18, **dadurch gekennzeichnet, dass** mit der Amplitude (c₁, c₂, c₃) auch die Wellenlänge (lambda₁, lambda₂, lambda₃) zunimmt.

20. Fahrzeugluftreifen nach einem der Ansprüche 14 bis 19, **dadurch gekennzeichnet, dass** die kleinste Amplitude (c₃) zwischen 35% und 60% der größten Amplitude (c₁) beträgt.

21. Fahrzeugluftreifen nach einem der Ansprüche 14 bis 20, **dadurch gekennzeichnet, dass** die wellenförmigen Einschnitte (17, 17', 18, 18') zumindest drei unterschiedlich große Amplituden (c₁, c₂, c₃) aufweisen, wobei die mittlere(n) Amplitude(n) (c₂) 65% bis 85% der größten Amplitude (c₁) beträgt bzw. betragen.

22. Fahrzeugluftreifen nach einem der Ansprüche 14 bis 21, **dadurch gekennzeichnet, dass** die zu einer Welle mit einer bestimmten Amplitude (c₁, c₂, c₃) gehörende Wellenlänge (lambda₁, lambda₂, lambda₃) mindestens dem zweifachen Wert dieser Amplitude (c₁, c₂, c₃) entspricht.

## Claims

1. Pneumatic vehicle tyre for use in winter driving conditions, with a tread rubber, which is divided by circumferential grooves (6, 7, 8, 6', 7', 8', 8"), transverse grooves (9, 10, 9', 10'), channels and the like into profile positives and in which one of the circumferential grooves (6, 6') divides the tread rubber into two differently formed regions, an outer region (A), situated on the outside, with respect to the vehicle, when the tyre is fitted, and an inner region (I), a row of blocks divided by transverse grooves (9, 10, 9', 10') being respectively provided on the shoulder side, and the transverse grooves (9, 9') being narrower in the row of shoulder blocks (1, 1') of the outer region (A) than those in the row of shoulder blocks (5, 5') of the inner region (I), when viewed in pitches corresponding to one another,
**characterized**
**in that** the profile positives are respectively provided with a multiplicity of sipes (14, 15, 16, 18, 17', 18', 25) running at least substantially in the transverse direction,
**in that** the width of the row of shoulder blocks (1, 1') of the outer region (A) is greater than the width of the row of shoulder blocks (5, 5') of the inner region (I),
**in that** the mutual spacing of the sipes (17, 17') in the blocks (1a, 1'a) of the row of shoulder blocks (1, 1') of the outer region (A) is greater than the spacing of the sipes (14, 25) in the row of shoulder blocks (5, 5') of the inner region (I) and
**in that** the sipes (17, 17') in the blocks (1a, 1'a) of the rows of shoulder blocks (1, 1') of the outer region (A) are narrower than the sipes (14, 25) in the blocks (5a, 5'a) of the row of shoulder blocks (5, 5') of the inner region (I).

2. Pneumatic vehicle tyre according to Claim 1, **characterized in that** the width of the transverse grooves (10, 10') in the row of shoulder blocks (5, 5') of the inner region (I) is at least 2% greater than the width of the transverse grooves (9, 9') in the row of shoulder blocks (1, 1') of the outer region (A).

3. Pneumatic vehicle tyre according to Claim 1 or 2, **characterized in that** the width of the row of shoulder blocks (1, 1') of the outer region (A) is at least 10% greater than the width of the row of shoulder blocks (5, 5') of the inner region (I).

4. Pneumatic vehicle tyre according to one of Claims 1 to 3, **characterized in that** the width of the sipes (17, 17') in the blocks (1a, 1'a) of the row of shoulder blocks (1, 1') of the outer region (A) is at least 20% less than the width of the sipes (14, 15) in the blocks (5a, 5'a) of the row of shoulder blocks (5, 5') of the inner region (I).

5. Pneumatic vehicle tyre according to one of Claims 1 to 4, **characterized in that** the flank on the tread rubber outer side of the circumferential groove (7, 7') delimiting the row of shoulder blocks (1, 1') of the outer region (A) forms an angle (alpha₁) with the radial direction that is at least 5° greater than the flank on the tread rubber outer side of the circumferential groove (8, 8') delimiting the row of shoulder blocks (5, 5') of the inner region (I).

6. Pneumatic vehicle tyre according to one of Claims 1 to 5, **characterized in that** the sipes (17, 17', 18, 18') of the profile positives in the outer region (A) form an angle (beta₁) with the transverse direction that is at most equal to the angle (beta₂) that the sipes (14, 15, 22, 25) in the profile positives in the inner region (I) form with the transverse direction.

7. Pneumatic vehicle tyre according to one of Claims 1 to 6, **characterized in that**, in profile positives in the inner region (I), at least two main sipes (5, 5') are provided adjacent to one another and are provided with at least two secondary sipes (22a, 23b, 26a, 26b), which point alternately in one and the other circumferential direction and do not have any connection with other sipes, the adjacent main sipes (22, 25) being made to coincide with respect to the direction of orientation of the branching secondary sipes (22a, 23b, 26a, 26b).

8. Pneumatic vehicle tyre according to Claim 7, **characterized in that** the main sipes (22) are offset with respect to one another in the transverse direction of the profile in such a way that meandering profile positive regions are formed.

9. Pneumatic vehicle tyre according to Claim 7 or 8, **characterized in that**, within a profile positive, the secondary sipes (22a, 23b, 26a, 26b) branching off from the main sipes (22, 25) have coinciding positions and directions of extent with respect to the circumferential direction.

10. Pneumatic vehicle tyre according to one of Claims 7 to 9, **characterized in that** the secondary sipes (22a, 23b, 26a, 26b) branch off from the main sipes (22, 25) at an angle of 80° to 100°.

11. Pneumatic vehicle tyre according to one of Claims 7 to 10, **characterized in that** the secondary sipes (22a, 23b, 26a, 26b) have a length (1) or extent which is between 45% and 55% of the normal spacing (n) of the main sipes (22, 25) adjacent to one another.

12. Pneumatic vehicle tyre according to one of Claims 7 to 11, **characterized in that** the secondary sipes (22a, 23b, 26a, 26b) have a mutual spacing (c) which is at least the normal spacing (n) of the main sipes (22, 25) adjacent to one another.

13. Pneumatic vehicle tyre according to one of Claims 7 to 12, **characterized in that** the main and/or secondary sipes (22a, 23b, 26a, 26b) run in a straight line.

14. Pneumatic vehicle tyre according to one of Claims 1 to 6, **characterized in that** the sipes (17, 17', 18, 18') in the profile positives in the outer region (A) run at least substantially in a wavy form in the transverse direction of the profile, the amplitude (c₁, c₂, c₃) of the wave form of the sipes (17, 17', 18, 18') increasing in one of the directions of extent of the sipes (17, 17', 18, 18').

15. Pneumatic vehicle tyre according to Claim 14, **characterized in that** the sipes (17, 17', 18, 18') have the greatest amplitude at their end portions facing circumferential grooves (7, 7').

16. Pneumatic vehicle tyre according to Claim 14 or 15, **characterized in that** the sipes (17, 17', 18, 18') have the greatest amplitude at their end portions opening into circumferential grooves (6, 7, 6', 7').

17. Pneumatic vehicle tyre according to one of Claims 14 to 16, **characterized in that** the amplitude (c₁, c₂, c₃) of the wave-shaped sipes (17, 17', 18, 18') increases at least in two stages.

18. Pneumatic vehicle tyre according to one of Claims 14 to 16, **characterized in that** the amplitude of the wave-shaped sipes (17, 17', 18, 18') increases continuously.

19. Pneumatic vehicle tyre according to one of Claims 14 to 18, **characterized in that**, with the amplitude (c₁, c₂, c₃), the wavelength (lambda₁, lambda₂, lambda₃) also increases.

20. Pneumatic vehicle tyre according to one of Claims 14 to 19, **characterized in that** the smallest amplitude (c₃) is between 35% and 60% of the greatest amplitude (c₁).

21. Pneumatic vehicle tyre according to one of Claims 14 to 20, **characterized in that** the wave-shaped sipes (17, 17', 18, 18') have at least three amplitudes (c₁, c₂, c₃) of different magnitudes, the mid-amplitude(s) (c₂) being 65% to 85% of the greatest amplitude (c₁).

22. Pneumatic vehicle tyre according to one of Claims 14 to 21, **characterized in that** the wavelength (lambda₁, lambda₂, lambda₃) belonging to a wave with a certain amplitude (c₁, c₂, c₃) corresponds to at least twice the value of this amplitude (c₁, c₂, c₃).

## Revendications

1. Bandage pneumatique pour roue de véhicule, destiné à être utilisé dans des conditions hivernales de roulage et présentant
une bande de roulement divisée en profils positifs par des rainures périphériques (6, 7, 8, 6', 7', 8', 8"), des rainures transversales (9, 10, 9', 10'), des sillons et similaires,
l'une des rainures périphériques (6, 6') divisant la bande de roulement en deux parties différentes, à savoir une partie extérieure (A) située du côté extérieur lorsque le bandage de roue est monté sur le véhicule et une partie intérieure (I),
une rangée de blocs divisée par des rainures transversales (9, 10, 9', 10') étant prévue du côté de chacun des épaulements,
les rainures transversales (9, 9') de la rangée (1, 1') de blocs d'épaulement de la partie extérieure (A), vues à des pas se correspondant mutuellement, étant plus étroites que celles de la rangée (5, 5') de blocs d'épaulement de la partie intérieure (I), **caractérisé en ce que**
les profils positifs sont tous dotés de plusieurs entailles (14, 15, 16, 18, 17', 18', 25) qui s'étendent au moins essentiellement dans la direction transversale,
**en ce que** la largeur de la rangée (1, 1') de blocs d'épaulement de la partie extérieure (A) est supérieure à la largeur de la rangée (5, 5') de blocs d'épaulement de la partie intérieure (I),
**en ce que** dans les blocs (1a, 1'a) de la rangée (1, 1') de blocs d'épaulement de la partie extérieure (A), la distance mutuelle entre les entailles (17, 17') est plus grande que la distance entre les entailles (14, 25) dans la rangée (5, 5') de blocs d'épaulement de la partie intérieure (I) et
**en ce que** dans les blocs (1a, 1'a) de la rangée (1, 1') de blocs d'épaulement de la partie extérieure (A), les entailles (17, 17') sont plus étroites que les entailles (14, 25) dans les blocs (5a, 5'a) de la rangée (5, 5') de blocs d'épaulement de la partie intérieure (I).

2. Bandage pneumatique pour roue de véhicule selon la revendication 1, **caractérisé en ce que** la largeur des rainures transversales (10, 10') de la rangée (5, 5') de blocs d'épaulement de la partie intérieure (I) est d'au moins 2 % plus grande que la largeur des rainures transversales (9, 9') de la rangée (1, 1') de blocs d'épaulement de la partie extérieure (A).

3. Bandage pneumatique pour roue de véhicule selon les revendications 1 ou 2, **caractérisé en ce que** la largeur de la rangée (1, 1') de blocs d'épaulement de la partie extérieure (A) est d'au moins 10 % plus grande que la largeur de la rangée (5, 5') de blocs d'épaulement de la partie intérieure (I).

4. Bandage pneumatique pour roue de véhicule selon l'une des revendications 1 à 3, **caractérisé en ce que** la largeur des entailles (17, 17') des blocs (1a, 1'a) de la rangée (1, 1') de blocs d'épaulement de la partie extérieure (A) est d'au moins 20 % plus petite que la largeur des entailles (14, 15) des blocs (5a, 5'a) de la rangée (5, 5') de blocs d'épaulement de la partie intérieure (I).

5. Bandage pneumatique pour roue de véhicule selon l'une des revendications 1 à 4, **caractérisé en ce que** du côté extérieur de la bande de roulement, le flanc de la rainure périphérique (7, 7') qui délimite la rangée (1, 1') de blocs d'épaulement de la partie extérieure (A) forme avec la direction radiale un angle (alpha₁) d'au moins 5° plus grand que le flanc situé du côté extérieur de la bande de roulement de la rainure périphérique (8, 8') qui délimite la rangée (5, 5') de blocs d'épaulement de la partie intérieure (I).

6. Bandage pneumatique pour roue de véhicule selon l'une des revendications 1 à 5, **caractérisé en ce que** les entailles (17, 17', 18, 18') des profils positifs de la partie extérieure (A) forment avec la direction transversale un angle (becta₁) qui est au plus égal à l'angle (beta₂) que les entailles (14, 15, 22, 25) forment avec la direction transversale dans les profils positifs de la partie intérieure (I).

7. Bandage pneumatique pour roue de véhicule selon l'une des revendications 1 à 6, **caractérisé en ce qu'**au moins deux entailles principales (5, 5') voisines l'une de l'autre sont prévues dans les profils positifs de la partie intérieure (I) et sont dotées d'au moins deux entailles secondaires (22a, 23b, 26a, 26b) qui sont orientées en alternance dans une direction périphérique et dans l'autre direction périphérique, ces entailles secondaires n'étant pas reliées à d'autres entailles, les entailles principales (22, 25) voisines correspondant à la direction d'orientation des entailles secondaires (22a, 23b, 26a, 26b) ramifiées.

8. Bandage pneumatique pour roue de véhicule selon la revendication 7, **caractérisé en ce que** les entailles principales (22) sont décalées l'une par rapport à l'autre dans la direction transversale du profil et **en ce que** des parties de profils positifs qui s'étendent en méandre sont formées.

9. Bandage pneumatique pour roue de véhicule selon les revendications 7 ou 8, **caractérisé en ce que** les entailles secondaires (22a, 23b, 26a, 26b) qui se ramifient à partir des entailles principales (22, 25) dans un profil positif ont des positions et des directions d'extension qui se correspondent dans la direction périphérique.

10. Bandage pneumatique pour roue de véhicule selon l'une des revendications 7 à 9, **caractérisé en ce que** les entailles secondaires (22a, 23b, 26a, 26b) se ramifient à partir des entailles principales (22, 25) sous un angle de 80° à 100°.

11. Bandage pneumatique pour roue de véhicule selon l'une des revendications 7 à 10, **caractérisé en ce que** les entailles secondaires (22a, 23b, 26a, 26b) ont une longueur (I) ou une extension qui correspond à entre 45 % et 55 % de la distance normale (n) entre les entailles principales (22, 25) mutuellement voisines.

12. Bandage pneumatique pour roue de véhicule selon l'une des revendications 7 à 11, **caractérisé en ce que** les entailles secondaires (22a, 23b, 26a, 26b) ont une distance mutuelle (c) qui représente au moins la distance normale (n) entre les entailles principales (22, 25) mutuellement voisines.

13. Bandage pneumatique pour roue de véhicule selon l'une des revendications 7 à 12, **caractérisé en ce que** les entailles principales et/ou les entailles secondaires (22a, 23b, 26a, 26b) s'étendent en ligne droite.

14. Bandage pneumatique pour roue de véhicule selon l'une des revendications 1 à 6, **caractérisé en ce que** les entailles (17, 17', 18, 18') des profils positifs de la partie extérieure (A) s'étendent sous forme d'ondulations au moins essentiellement dans la direction transversale du profil, l'amplitude (c₁, c₂, c₃) de la forme d'onde des entailles (17, 17', 18, 18') augmentant dans une des directions d'extension des entailles (17, 17', 18, 18').

15. Bandage pneumatique pour roue de véhicule selon la revendication 14, **caractérisé en ce que** les entailles (17, 17', 18, 18') ont leur plus grande amplitude sur leur partie d'extrémité tournée vers leur rainure périphérique (7, 7').

16. Bandage pneumatique pour roue de véhicule selon les revendications 14 ou 15, **caractérisé en ce que** les entailles (17, 17', 18, 18') ont leur plus grande amplitude sur leur partie d'extrémité qui débouche dans les rainures périphériques (6, 7, 6', 7').

17. Bandage pneumatique pour roue de véhicule selon l'une des revendications 14 à 16, **caractérisé en ce que** l'amplitude (c₁, c₂, c₃) des entailles (17, 17', 18, 18') en forme d'ondulations augmente en au moins deux étapes.

18. Bandage pneumatique pour roue de véhicule selon l'une des revendications 14 à 16, **caractérisé en ce que** l'amplitude des entailles (17, 17', 18, 18') en forme d'ondulations augmente de manière continue.

19. Bandage pneumatique pour roue de véhicule selon l'une des revendications 14 à 18, **caractérisé en ce que** la longueur d'onde (lambda₁, lambda₂, lambda₃) augmente également avec l'amplitude (c₁, c₂, c₃).

20. Bandage pneumatique pour roue de véhicule selon l'une des revendications 14 à 19, **caractérisé en ce que** la plus petite amplitude (c₃) représente entre 35 % et 60 % de la plus grande amplitude (c₁).

21. Bandage pneumatique pour roue de véhicule selon l'une des revendications 14 à 20, **caractérisé en ce que** les entailles (17, 17', 18, 18') en forme d'ondulations présentent au moins trois amplitudes (c₁, c₂, c₃) de valeurs différentes, la ou les amplitudes moyennes (c₂) représentant de 65 % à 85 % de la plus grande amplitude (c₁).

22. Bandage pneumatique pour roue de véhicule selon l'une des revendications 14 à 21, **caractérisé en ce que** la longueur d'onde (lambda_{1,} lambda₂, lambda₃) qui présente une amplitude (c₁, c₂, c₃) définie correspond au moins au double de la valeur de cette amplitude (c₁, c₂, c₃).
